# EUROPEAN PATENT SPECIFICATION

(11) **EP 4 123 044 B1**
(45) Date of publication and mention of the grant of the patent: **06.03.2024**
(21) Application number: 21786319.0
(22) Date of filing: 27.05.2021
(51) Int. Cl.: C22C 19/05, C22C 30/00

(54) **HIGH-TEMPERATURE ALLOY HAVING LOW STACKING FAULT ENERGY, STRUCTURAL MEMBER AND APPLICATION THEREOF**
HOCHTEMPERATURLEGIERUNG MIT NIEDRIGER STAPELFEHLERENERGIE, BAUTEIL UND VERWENDUNG DERSELBEN
ALLIAGE À HAUTE TEMPÉRATURE AYANT UNE FAIBLE ÉNERGIE DE DÉFAUT D'EMPILEMENT, ÉLÉMENT STRUCTUREL ET APPLICATION DE CELUI-CI

(30) Priority: 22.04.2021 CN 202110433365
(43) Date of publication of application: 25.01.2023
(73) Proprietor: Gaona Aero Material Co., Ltd., Haidian Beijing 100081 (CN)
(72) Inventor: BI, Zhongnan, Beijing 100081 (CN); YU, Hongyao, Beijing 100081 (CN); DU, Jinhui, Beijing 100081 (CN); QIN, Hailong, Beijing 100081 (CN); GAN, Bin, Beijing 100081 (CN)
(74) Representative: Ponti & Partners, S.L.P
(86) International application number: PCT/CN2021/096494
(87) International publication number: WO 2022/222225

(56) References cited:
- EP-A1- 1 201 777
- EP-A1- 1 201 777
- EP-A1- 1 842 934
- EP-A1- 2 778 241
- EP-A1- 2 778 241
- EP-A1- 3 287 209
- CN-A- 101 072 887
- CN-A- 111 549 259
- CN-A- 111 549 259
- CN-A- 112 226 649

## Description

### Cross-reference to Related Application

The present application claims the priority to a Chinese patent application No. 2021104333653, filed with the Chinese Patent Office on April 22, 2021 and entitled "high-temperature alloy with low stacking fault energy, structural member and use thereof.

### Technical Field

The present application relates to the technical field of high-temperature alloys, in particular to a high-temperature alloy with low stacking fault energy, a structural member comprising the high-temperature alloy with low stacking fault energy and use thereof.

### Background Art

Like the "heart" of the aircraft, the aviation engine is known as "jewel on the crown" among high-end manufacturing industries. High-temperature alloy materials are foundations of the aviation engine, as well as key materials for important weapons and equipment such as aerospace vehicles and naval gas turbines. In particular, due to its excellent service performance and also good process applicability, a general-purpose high-temperature alloy can enable "one material with multiple uses" with outstanding cost performance, and has been widely used in fields such as aviation, aerospace and naval vessel.

GH4169 alloy, which is the representative of the general-purpose high-temperature alloys at this stage, is the most consumed and most versatile core high-temperature alloy material in various fields in China. In recent years, as the aviation engine and the aerospace vehicle have demanded increasingly more in the performance level, on the one hand, there is a need for the new generation of high-temperature alloy materials to increase the temperature bearing capacity of 100°C, and on the other hand, there is also a need for it to have good process characteristics to make parts and components with increasingly complex structures, achieving the goal of reducing weight and increasing efficiency. Taking the new generation of aviation engines as an example, the whole bladed disc at the final stage of the high-pressure compressor has reached the service temperature of 750°C, whereas the GH4169 alloy has only a stable use temperature of 650°C, and can no longer meet the requirements of use with its temperature bearing capacity and performance level.

EP1842934 discloses a heat-resistant superalloy used for heat-resistant members of aircraft engines, power-generating gas turbines, etc. and a heat-resistant superalloy member manufactured by one or more methods of casting, forging and powder metallurgy from the heat-resistant superalloy. However, the thermal processing performance and the mechanical performance of this superalloy is still poor to have service performance above 750°C with improved thermal processing, welding and 3D printing characteristics.

In order to improve the temperature bearing capacity and the mechanical performance of alloys, in China and abroad, the redissolution temperature and the volume fraction of the strengthening phase are mainly improved by increasing the alloying degree of materials. However, this method tends to increase the tendency of alloy segregation, and narrow the window for thermal processing, leading to increases in the difficulty in thermal processing. Moreover, cracking occurs easily in the course of the welding and after the welding. Thus, the scope of the application of this method is limited greatly. On the other hand, the additive manufacturing (3D printing) technology, which can significantly improve the capacity for forming complex components and the efficiency for producing a single-piece, is an advanced manufacturing technology that has developed rapidly in recent years, and has been widely used particularly in high-speed aircrafts. However, this technology is highly dependent on the processability, especially weldability, of the alloy materials. At present, the alloys that can be formed by printing have insufficient strength and temperature bearing capacity, and the high-performance high-temperature alloy grades have cracking occurred easily and are difficult to print, resulting in no materials available in design. Therefore, it is an object of the present application to develop a general-purpose high-temperature alloy with both high performance and good process performance.

In view of the above, the present application is hereby proposed.

### Summary

An object of the present application includes providing a high-temperature alloy with low stacking fault energy, so as to solve the technical problem in the prior art that the service performance is conflicting with the making process characteristics.

An object of the present application includes providing a structural member made of the high-temperature alloy with low stacking fault energy.

An object of the present application includes providing use of the structural member made of the high-temperature alloy with low stacking fault energy.

In order to achieve the above objects of the present application, the following technical solutions are particularly adopted.

The high-temperature alloy with low stacking fault energy of the present application is as defined in claim 1.

The method for strengthening the high-performance high-temperature alloy is mainly to strengthen the precipitated phase in combination with strengthening of a solid solution and a grain boundary to obtain a comprehensive high-temperature performance. However, in case of using only the above method for strengthening, the means used to continue to improve the alloy performance is generally to increase the alloying degree of the material, but the means used will bring about a deterioration of the process performance, and also cannot meet the requirements on both a high performance and a good process performance.

It was found during the exploration of the present application that microstructures such as microtwinning occur easily during the deformation process when the stacking fault energy of the matrix in the high-temperature alloy is reduced, and the mechanical performance of the alloy can be improved apparently during the service process when the microtwinning and the like and the precipitated phase cooperate synergistically; and optionally, by simultaneously adjusting strengthening phase element, a general-purpose high-temperature alloy with both a high performance and a good process performance can be obtained.

The high-temperature alloy with low stacking fault energy of the present application can have service performance above 750°C and good thermal processing, welding and 3D printing and other characteristics, and can be used as structural members for long-term use, for example, a turbine disc, a blade, a casing (cartridge receiver), a combustion chamber, and the like.

In the present application, by adding Nb and Ta, the precipitation rate of the strengthening phase is slowed down, the redissolution temperature of the strengthening phase is reduced, and the γ single-phase region is enlarged, so that the alloy has an excellent thermal deformation process performance.

In a specific embodiment of the present application, in the high-temperature alloy with low stacking fault energy, the mass fraction of Co is 23.5%-26.5%, preferably 24%-26%.

Increase in the content of Co in the high-temperature alloy can effectively reduce the stacking fault energy of the γ matrix and have microtwinning easily occurred. When the microtwinning and γ' phase are strengthened synergistically, the performance of the material can be effectively improved. However, the addition of excessive Co element will not continue to significantly reduce the stacking fault energy, but will have the problem of increased alloy cost at the same time. In the present application, by using the above content of Co in cooperation with other ingredients, the stacking fault energy can be reduced, and a good performance can be obtained.

In a specific embodiment of the present application, in the high-temperature alloy with low stacking fault energy, the mass fraction of C is 0.01%-0.06%, preferably 0.01%-0.04%, and more preferably 0.01%∼0.02%.

The addition of C element to the high-temperature alloy may segregate in the grain boundary and increase the grain boundary strength; and it will also form carbides like MC, or M6C, or M23C6, which hinder the movement of dislocations under high temperature conditions and perform a function of high temperature strengthening. However, an excessive content of C will cause carbides to be precipitated at the grain boundary and form a continuous carbide film, which is not good to the mechanical performance of the alloy. The present application can ensure the high temperature strengthening effect and mechanical performance of the alloy by adjusting the content of C within the above range, in cooperation with other elements.

In a specific embodiment of the present application, in the high-temperature alloy with low stacking fault energy, the mass fraction of Cr is 12%-14%, preferably 12%-13%.

The addition of Cr element can effectively reduce the stacking fault energy of the matrix of the alloy, and can also perform a function of solid solution strengthening, and thus may improve the high-temperature mechanical performance of the material. Also, the addition of Cr element can form a dense oxide film on the surface of the metal under high temperature conditions, so as to improve the oxidation resistance performance of the alloy. However, if the content of Cr exceeds 16%, the precipitation of harmful secondary phases will be facilitated greatly, which will affect the high-temperature mechanical performance of the alloy. Therefore, in the present application, it is preferable to adjust the content of Cr within 12%-13% in order to take into account performances in various aspects.

In a specific embodiment of the present application, in the high-temperature alloy with low stacking fault energy, a sum of the mass fractions of W and Mo is≥ 3%, preferably ≥4%.

In a specific embodiment of the present application, the mass fraction of W is 1%-1.8%, more preferably 1%-1.5%, and further preferably 1.1%∼1.3%; and the mass fraction of Mo is 2.1%-3.0%, more preferably 2.5%-3.0%, and further preferably 2.7%- 2.9%.

The addition of W has a solid solution strengthening effect on both γ and γ' phases. However, when an excessive content of W will increase the tendency of precipitating a harmful phase such as µ phase on the one hand; and will increase the overall density of the alloy, limiting the application of the alloy on the other hand. Therefore, in the present application, the content of W is adjusted within the above range to ensure performance. Similar to the effect of W, Mo preferentially enters the γ phase and performs a function of solid solution strengthening in the nickel-based high-temperature alloy. However, an excessive content of Mo will increase the tendency of precipitating harmful phases such as σ phase and µ phase, resulting in a decrease in alloy performance. By adjusting the content of W and Mo within the above range, the precipitation and coarsening of the TCP phase is avoided, and a good solid solution strengthening effect is also obtained.

In a specific embodiment of the present application, a sum of the mass fractions of Al, Ti, Nb and Ta is ≥7%.

In a specific embodiment of the present application, in the high-temperature alloy with low stacking fault energy, the mass fraction of Al is 2.3%∼2.5%.

In the high-temperature alloy, Al element is the forming element of γ' strengthening phase; as the content of the Al element increases, on the one hand, the volume fraction of γ' strengthening phase can be increased to obtain excellent high temperature performance; and on the other hand, it can also reduce the alloy density to increase its scope of application. However, a higher content of Al will increase the redissolution temperature of the γ' phase and narrow the window for thermal processing, which will damage the thermal processing characteristics of the alloy. Therefore, the present application can ensure the thermal processing characteristics of the alloy while improving the high temperature performance and reducing the density, by adjusting the Al content within the range of 2.3%∼2.5%.

In a specific embodiment of the present application, in the high-temperature alloy with low stacking fault energy, the mass fraction of Ti is 4.4%∼4.6%. In the high-temperature alloy, Ti element is also the forming element of γ' strengthening phase; as the content of the Ti element increases, the volume fraction of γ' strengthening phase can also be increased to obtain excellent high temperature performance. However, the risk of precipitating η phase will increase along with the increased Ti content, which reduces the performance of the alloy.

In accordance with the high-temperature alloy with low stacking fault energy of the present application, a ratio of a sum of the mass fractions of Nb and Ta to the mass fraction of the Al element is ≥0.4; and a ratio of the mass fraction of Ti to the mass fraction of Al is ≤2.1. Optionally, the mass fraction of Nb is 0.5%∼1.5%; and the mass fraction of Ta is 0.1%∼2.0%. The addition of the Nb element can effectively reduce the precipitation rate of the γ' strengthening phase, and can also reduce the redissolution temperature of the γ' strengthening phase at the same time, which is beneficial to the thermal deformation process. However, an excessive content of Nb will adversely affect the crack growth resistance of the material. The addition of the Ta element can increase the anti-phase domain boundary energy to increase the strength of the alloy; at the same time, it also reduces the γ' redissolution temperature, which is good to the thermal processing performance of the alloy. But Ta will increase the risk of precipitating TCP phase, and increase alloy density and cost. In connection with the effect of the above Al element and Ti element in the alloy system, by adjusting the content of Nb within 0.5%∼1.5% and the content of Ta within 0.1%∼2.0%, and requiring a ratio of a sum of the mass fractions of Nb and Ta to the mass fraction of Al element ≥0.4 and the ratio of the mass fraction of Ti to the mass fraction of Al ≤2.1, the thermal processing performance of the alloy and the mechanical performance of the alloy can be considered and improved in many aspects.

In the alloy of the present application, the mass fraction of the added Fe element does not exceed 2.5%, which can effectively reduce the alloy cost without excessively affecting the overall performance level of the alloy, and allows the addition of return materials such as solid waste and machining debris during the alloy manufacturing process.

In a specific embodiment of the present application, in the high-temperature alloy with low stacking fault energy, the mass fraction of B is 0.001%-0.03%, and the mass fraction of Zr is 0.001%∼0.03%. Both B and Zr elements segregate in the grain boundary, and can improve the thermoplasticity and the high temperature creep strength of the alloy; but the B element is easy to form a low melting point phase of boride, and an excessive content of Zr increases the process difficulty in obtaining a homogenized ingot. A specific content of B and Zr used can improve the performance of the alloy and improve the processing process.

In a specific embodiment of the present application, in the high-temperature alloy with low stacking fault energy, the volume fraction of γ' strengthening phase is above 30%, preferably 40%-55%, and more preferably 40%-50%.

An excessive volume fraction of the γ' strengthening phase such as 55% or even higher obtains a higher high temperature strength, but has its thermal deformation process performance reduced, rendering difficult to make a large-size forging member. In the present application, comprehensively considering the high temperature performance level and the thermal deformation process performance of the alloy, the volume fraction of the γ' strengthening phase preferably reaches above 40%; and moreover, in connection with the strengthening mechanism such as microtwinning, the γ' phase and the microtwinning are strengthened synergistically, obtaining the high-temperature alloy with an excellent high-temperature performance.

In a specific embodiment of the present application, the high-temperature alloy with low stacking fault energy includes: by mass fraction, 0.01%~0.04% of C, 24%-26% of Co, 12%-14% of Cr, 1%∼1.5% of W, 2.5%~3.0% of Mo, 2.3%∼2.5% of Al, 4.4%∼4.6% of Ti, 0.5%∼1.5% of Nb, 0.1%∼2.0% of Ta, 0.001%~0.03% of B, 0.001%~0.03% of Zr, 0%∼2.5% of Fe, 0%∼0.04% of Mg, and a balance of Ni. Preferably, the high-temperature alloy with low stacking fault energy includes: by mass fraction, 0.01%∼0.02% of C, 24%-26% of Co, 12%-14% of Cr, 1%∼1.5% of W, 2.5%∼3.0% of Mo, 2.3%∼2.5% of Al, 4.4%∼4.6% of Ti, 0.5%∼1.5% of Nb, 0.1%~2.0% of Ta, 0.001%~0.03% of B, 0.001%~0.03% of Zr, 0%∼2.5% of Fe, 0 %~0.04% of Mg, and a balance of Ni. More preferably, the high-temperature alloy with low stacking fault energy includes: by mass fraction, 0.01∼0.02% of C, 24%-26% of Co, 12%-13% of Cr, 1.1%∼1.3% of W, 2.7%∼2.9% of Mo, 2.3%∼2.5% of Al, 4.4%∼4.6% of Ti, 0.5 %∼1.5% of Nb, 0.1%∼2.0% of Ta, 0.001%~0.03% of B, 0.001%~0.03% of Zr, 0%∼2.5% of Fe, and a balance of Ni.

The present application further provides a structural member made of any one of the above high-temperature alloys with low stacking fault energy as defined in claim 12.

In accordance with the present application, the structural member includes any one of a forging member, a casting member, and an additively manufactured structural member.

In a specific embodiment of the present application, a method for making the forging member includes:
(a) dosing in accordance with ingredients of the high-temperature alloy with low stacking fault energy, and smelting the mixture to obtain an ingot; and
(b) performing homogenizing processing on the ingot, then making the same forged into a shape, and then performing thermal processing.

In a specific embodiment of the present application, a method for making the casting member includes:
dosing in accordance with ingredients of the high-temperature alloy with low stacking fault energy, performing a vacuum induction smelting, and performing thermal processing after casting.

In a specific embodiment of the present application, a method for making the additively manufactured structural member includes:
(a) dosing in accordance with ingredients of the high-temperature alloy with low stacking fault energy, smelting the mixture to obtain an electrode rod, pulverizing the same, and then performing 3D printing in accordance with the preset model; and
(b) performing hot isostatic pressure processing and thermal processing on the profile obtained by 3D printing.

The present application further provides use of any one of the above structural members in aviation and aerospace equipment.

Compared with the prior art, the present application brings about the following beneficial effects:
(1) in the high-temperature alloy with low stacking fault energy of the present application, the content of Co is increased to a certain extent, solid solution elements such as Mo and W are optimized, the ratio of the strengthening phase elements of Al, Ti, Nb, and Ta is adjusted, and an appropriate amount of trace elements such as C and B are also added, so that the stacking fault energy of the matrix can be effectively reduced and the introduction of microtwinning in the subsequent thermal deformation process can be facilitated, wherein microtwinning and γ' phase are strengthened synergistically, in combination with the grain boundary strengthening effect, the temperature bearing capacity and the high temperature strength of the alloy can be effectively improved; on the other hand, the adjustment of the strengthening phase elements can effectively slow down the precipitation rate of the strengthening phase, reduce the redissolution temperature of the strengthening phase, expand the window for thermal processing, and effectively improve the process performance of the alloy while ensuring a sufficient number of strengthening phases, so that the alloy has service performance above 750°C and good thermal processing, welding and 3D printing characteristics; and
(2) the high-temperature alloy with low stacking fault energy of the present application can be cast, forged, welded, printed, and so on; it has an excellent process performance, and can be suitable for making a structural member in aviation and aerospace equipment, for example, it can be used as structural members for long-term use for example a turbine disc, a blade, a casing, and a combustion chamber.

### Brief Description of Drawings:

Drawings required for use in the description of specific embodiments or the prior art will be introduced briefly below in order to explain the technical solutions of the specific embodiments of the present application or of the prior art more clearly, and it will be apparent that the drawings described below are merely illustrative of some embodiments of the present application, and those skilled in the art can also obtain, from these drawings, other drawings without inventive efforts.

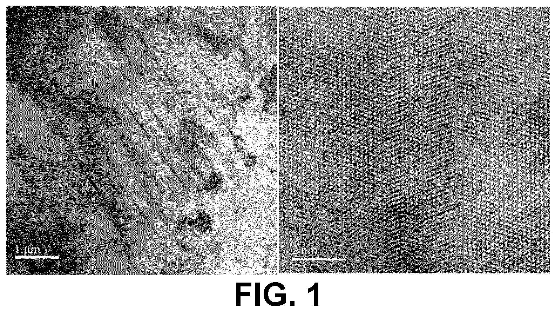

FIG. 1 is a typical microstructure diagram of a high-temperature alloy in accordance with an example of the present application.

### Detailed Description of the Embodiments

The technical solutions of the present application will be described clearly and completely below with reference to the drawings and the specific embodiments. However, those skilled in the art would appreciate that the following examples described are some, but not all examples of the present application, and are only for illustrating the present application, and shall not be construed as limiting the scope of the present application. If no specific conditions are specified in the example, the general conditions or the conditions recommended by the manufacturer shall apply. If not indicated the manufacturer, the reagents or instruments used are conventional products commercially available.

The high-temperature alloy with low stacking fault energy of the present application is as defined in claim 1.

The high-temperature alloy with low stacking fault energy of the present application can both have service performance above 750°C and good thermal processing, welding and 3D printing and other characteristics, and can be used as structural members for long-term use for example a turbine disc, a blade, a casing, a combustion chamber and the like.

For example, in different embodiments, the mass fraction of each component can be as follows, respectively:
the mass fraction of C may be 0.01%, 0.02%, 0.03%, 0.04%, 0.05%, 0.06%, 0.07%, 0.08%, 0.09%.;
the mass fraction of Co can be 23.5%, 24%, 24.5%, 25%, 25.5%, 26%, 26.5%, 27%, 27.5%.;
the mass fraction of Cr can be 11%, 12%, 12.5%, 13%, 13.5%, 14%, 15%.;
the mass fraction of W can be 0.1%, 0.2%, 0.3%, 0.4%, 0.5%, 0.6%, 0.7%, 0.8%, 0.9%, 1%, 1.1%, 1.2%, 1.3%, 1.4%, 1.5% , 1.6%, 1.7%, 1.8%.;
the mass fraction of Mo can be 2.1%, 2.2%, 2.5%, 2.8%, 3%, 3.2%, 3.5%.;
the mass fraction of Al can be 2.2%, 2.3%, 2.4%, 2.5%, 2.6%.;
the mass fraction of Ti can be 3.5%, 3.8%, 4%, 4.2%, 4.5%, 4.8%, 5%, 5.2%, 5.5%.;
the mass fraction of Nb can be 0.5%, 0.8%, 1%, 1.2%, 1.5%, 1.8%, 2%.;
the mass fraction of Ta can be 0.1%, 0.2%, 0.5%, 0.8%, 1%, 1.2%, 1.5%, 1.8%, 2%.;
the mass fraction of B can be 0.0001%, 0.0005%, 0.001%, 0.005%, 0.01%, 0.015%, 0.02%, 0.025%, 0.03%, 0.035%, 0.04%, 0.045%, 0.05%.;
the mass fraction of Zr can be 0.0001%, 0.0005%, 0.001%, 0.005%, 0.01%, 0.015%, 0.02%, 0.025%, 0.03%, 0.035%, 0.04%, 0.045%, 0.05%.;
the mass fraction of Fe can be 0%, 0.1%, 0.2%, 0.5%, 0.8%, 1%, 1.2%, 1.5%, 1.8%, 2%, 2.2%, 2.5%.; and
the mass fraction of Mg can be 0%, 0.01%, 0.02%, 0.03%, 0.04%.

In a specific embodiment of the present application, in the high-temperature alloy with low stacking fault energy, the mass fraction of Co is 23.5%-26.5%, preferably 24%-25%.

Increase in the content of Co in the high-temperature alloy can effectively reduce the stacking fault energy of the γ matrix and have microtwinning easily occurred. When the microtwinning and γ' phase are strengthened synergistically, the performance of the material can be effectively improved. However, the addition of excessive Co element will not continue to significantly reduce the stacking fault energy, but will have the problem of increased alloy cost at the same time. In the present application, by using the above content of Co in cooperation with other ingredients, the stacking fault energy can be reduced, and a good performance can be obtained.

In a specific embodiment of the present application, in the high-temperature alloy with low stacking fault energy, the mass fraction of C is 0.01%∼0.06%, preferably 0.01%-0.04%, and more preferably 0.01%∼0.02%.

The addition of C element to the high-temperature alloy may segregate in the grain boundary and increase the grain boundary strength; it will also form carbides like MC, or M6C, or M23C6, which hinder the movement of dislocations under high temperature conditions and perform a function of high temperature strengthening. However, an excessive content of C will cause carbides to be precipitated at the grain boundaries and form a continuous carbide film, which is not good to the mechanical performance of the alloy. The present application can ensure the high temperature strengthening effect and the mechanical performance of the alloy by adjusting the content of C within the above range in combination with other elements.

In a specific embodiment of the present application, in the high-temperature alloy with low stacking fault energy, the mass fraction of Cr is 12%-14%, preferably 12%-13%.

The addition of Cr element can effectively reduce the stacking fault energy of the matrix of the alloy, and can also perform a function of solid solution strengthening, so that the high-temperature mechanical performance of the material can be improved. Also, the addition of Cr element can form a dense oxide film on the surface of the metal under high temperature conditions to improve the oxidation resistance performance of the alloy. However, if the content of Cr exceeds 16%, the precipitation of harmful secondary phases will be facilitated greatly, which will affect the high-temperature mechanical performance of the alloy. Therefore, in the present application, it is preferable to adjust the content of Cr within 12%-13% in order to take into account performances in various aspects.

In a specific embodiment of the present application, in the high-temperature alloy with low stacking fault energy, a sum of the mass fractions of W and Mo is≥ 3%, preferably ≥4%.

In a specific embodiment of the present application, the mass fraction of W is 1%-1.8%, more preferably 1%∼1.5%, and further preferably 1.1%∼1.3%; and the mass fraction of Mo is 2.1%-3.0%, more preferably 2.5%-3.0%, and further preferably 2.7%- 2.9%.

The addition of W has a solid solution strengthening effect on both γ and γ' phases. However, an excessive content of W will increase the tendency of precipitating a harmful phase such as µ phase on the one hand; and increase the overall density of the alloy, limiting the application of the alloy on the other hand. Therefore, in the present application, the content of W is adjusted within the above range to ensure performance. Similar to the effect of W, Mo preferentially enters the γ phase and performs a function of solid solution strengthening in the nickel-based high-temperature alloy. However, an excessive content of Mo will increase the tendency of precipitating harmful phases such as σ phase and µ phase, resulting in a decrease in alloy performance. By adjusting the contents of W and Mo within the above range, the precipitation and coarsening of the TCP phase is avoided, and also a good solid solution strengthening effect is obtained.

In a specific embodiment of the present application, a sum of the mass fractions of Al, Ti, Nb and Ta is ≥7%.

In a specific embodiment of the present application, in the high-temperature alloy with low stacking fault energy, the mass fraction of Al is 2.3%∼2.5%.

In the high-temperature alloy, Al element is the forming element of γ' strengthening phase; as the content of the Al element increases, on the one hand, the volume fraction of γ' strengthening phase can be increased to obtain an excellent high temperature performance; and on the other hand, it can also reduce the alloy density to increase its scope of application. However, a higher content of Al will increase the redissolution temperature of the γ' phase and narrow the window for thermal processing, which will damage the thermal processing characteristics of the alloy. Therefore, the present application can ensure the thermal processing characteristics of the alloy while improving the high temperature performance and reducing the density, by adjusting the Al content within the range of 2.3%- 2.5%.

In a specific embodiment of the present application, in the high-temperature alloy with low stacking fault energy, the mass fraction of Ti is 4.4%∼4.5%. In the high-temperature alloy, Ti element is also the forming element of γ' strengthened phase; as the content of the Ti element increases, the volume fraction of γ' strengthening phase can also be increased to obtain an excellent high temperature performance. However, the risk of precipitating η phase will increase along with the Ti content, which reduces the performance of the alloy.

As described above, in the high-temperature alloy with low stacking fault energy of the present application, a ratio of a sum of the mass fractions of Nb and Ta to the mass fraction of the Al element is ≥0.4; and a ratio of the mass fraction of Ti to the mass fraction of Al is ≤2.1. Optionally, the mass fraction of Nb is 0.5%- 1.5%; and the mass fraction of Ta is 0.1%- 2.0%. The addition of the Nb element can effectively reduce the precipitation rate of the γ' strengthening phase, and can also reduce the redissolution temperature of the γ' strengthening phase at the same time, which is beneficial to the thermal deformation process. However, an excessive content of Nb will adversely affect the crack growth resistance of the material. The addition of the Ta element can increase the anti-phase domain boundary energy to increase the strength of the alloy; at the same time, it also reduces the γ' redissolution temperature, which is good to the thermal processing performance of the alloy. But Ta will increase the risk of precipitating TCP phase, and increase alloy density and cost. In connection with the effect of the above Al element and Ti element in the alloy system, by adjusting the content of Nb within 0.5%-1.5%, and the content of Ta within 0.1%-2.0%, and requiring the ratio of a sum of the mass fractions of Nb and Ta to the mass fraction of Al element ≥0.4 and the ratio of the mass fraction of Ti to the mass fraction of Al ≤2.1, the thermal processing performance of the alloy and the mechanical performance of the alloy can be considered and improved in many aspects.

In the alloy of the present application, the mass fraction of the added Fe element does not exceed 2.5%, which can effectively reduce the alloy cost without excessively affecting the overall performance level of the alloy, and allows the addition of return materials such as solid waste and machining debris during the alloy manufacturing process.

In a specific embodiment of the present application, in the high-temperature alloy with low stacking fault energy, the mass fraction of B is 0.001%-0.03%, and the mass fraction of Zr is 0.001%∼0.03%. Both B and Zr elements segregate in the grain boundary, and can improve the thermoplasticity and the high temperature creep strength of the alloy; but the B element is easy to form a low melting point phase of boride, and an excessive content of Zr element increases the process difficulty in obtaining a homogenized ingot. The specific content of B and Zr used can improve the performance of the alloy and improve the processing process.

In a specific embodiment of the present application, in the high-temperature alloy with low stacking fault energy, the volume fraction of γ' strengthening phase is above 30%, preferably 40%-55%, and more preferably 40%-50%.

An excessive volume fraction of the γ' strengthening phase such as 55% or even higher obtains a higher high temperature strength, but has its thermal deformation process performance reduced, rendering difficult to prepare a large-size forging member. In the present application, considering both the high temperature performance level and the thermal deformation process performance of the alloy, the volume fraction of the γ' strengthening phase preferably reaches above 40%; and moreover, in connection with the strengthening mechanism such as microtwinning, the γ' phase and the microtwinning are strengthened synergistically, obtaining the high-temperature alloy with an excellent high-temperature performance.

In a specific embodiment of the present application, a high-temperature alloy with low stacking fault energy includes, by mass fraction: 0.01%~0.04% of C, 24%-26% of Co, 12%-14% of Cr, 1%∼1.5% of W, 2.5%∼3.0% of Mo, 2.3%∼2.5% of Al, 4.4%∼4.6% of Ti, 0.5%∼1.5% of Nb, 0.1%∼2.0% of Ta, 0.001%~0.03% of B, 0.001%~0.03% of Zr, 0%∼2.5% of Fe, 0%∼0.04% of Mg, and a balance of Ni. More preferably, a high-temperature alloy with low stacking fault energy includes, by mass fraction: 0.01%∼0.02% of C, 24%-26% of Co, 12%-13% of Cr, 1.1%∼1.3% of W, 2.7%∼2.9% of Mo, 2.3%∼2.5% of Al, 4.4%∼4.6% of Ti, 0.5 %∼1.5% of Nb, 0.1%~2.0% of Ta, 0.001%~0.03% of B, 0.001%~0.03% of Zr, 0%∼2.5% of Fe, and a balance of Ni.

The present application further provides a structural member made of any one of the above high-temperature alloys with low stacking fault energy as defined in claim 12.

The structural member of the present application includes any one of a forging member, a casting member, and an additively manufactured structural member.

In a specific embodiment of the present application, a method for making the forging member includes:
(a) dosing in accordance with ingredients of the high-temperature alloy with low stacking fault energy, and smelting the mixture to obtain an ingot; and
(b) performing homogenizing processing on the ingot, then making the same forged into a shape, and then performing thermal processing.

In a specific embodiment of the present application, the condition of the homogenizing processing includes: a heat preservation is carried out at 1100-1150°C for 24-36h, and then a heat preservation is carried out at 1170-1190°C for 36-48h.

In a specific embodiment of the present application, a method for making the casting member includes:
dosing in accordance with ingredients of the high-temperature alloy with low stacking fault energy, performing a vacuum induction smelting, and then performing thermal processing after casting, to obtain the casting member.

In a specific embodiment of the present application, a method for making the additively manufactured structural member includes:
(a) dosing in accordance with ingredients of the high-temperature alloy with low stacking fault energy, smelting the mixture to obtain an electrode rod, then pulverizing the same, and performing 3D printing in accordance with the preset model; and
(b) performing hot isostatic pressure processing and thermal processing on the profile obtained by 3D printing.

In actual operations, the method for smelting and making powder (pulverizing) includes: preparing a master alloy with the vacuum horizontal continuous casting technology or the vacuum induction smelting technology, and making powder with the vacuum air atomization method. Optionally, 3D printing is carried out with the powder feeding or powder spreading laser selective melting technology.

In a specific embodiment of the present application, the condition of the hot isostatic pressure processing includes: a temperature of 1150 to 1200°C, a pressure not less than 120~140 MPa, and a duration for heat and pressure preservation not less than 2 h.

In a specific embodiment of the present application, the condition of the thermal processing includes: solid solution processing is carried out at 1050~1120°C for 2-6 h, air cooling is carried out to room temperature; then the temperature is heated to 600~700°C, aging processing is carried out for 20-30 h, then air cooling is carried out to room temperature, and then the temperature is heated to 700~800°C and aging processing is carried out for 10-20 h, and then air cooling is carried out to room temperature.

The present application also provides use of any one of the above structural members in aviation and aerospace equipment.

### Examples 1-7

Examples 1-7 respectively provide 1# to 7# high-temperature alloys and method for making the same. The measured ingredients of the high-temperature alloy are shown in Table 1. In addition, the method for making the alloys in Comparison 1#-Comparison 3# is the same as that of Examples 1-7, except that the ingredients of the high-temperature alloy are different.

The method for making a high-temperature alloy comprises the following steps.
(1) A certain amount of smelting raw materials that can obtain C, Co, Cr, W, Al, Ti, Nb, Ta, Mo, B, Zr, Fe, Mg, Hf and Ni elements was weighed in accordance with the principle of an element ratio of the high-temperature alloy, including base materials and volatile elements; the base materials were placed in a vacuum induction furnace crucible, and the volatile elements were placed in the feeder, and then vacuuming was carried out to start a vacuum induction melting. Power was up for heating up when the vacuum degree was less than 3Pa, and then refining was carried out for 40 min after full melting (gradually reducing the power) until the power was off. When the molten steel was cooled to a certain temperature, Al, C, Ti, B, Hf, Mg, and the like were added for alloying, and power was off for cooling down after a full stirring; and power was up for forming an alloy ingot in case of a suitable temperature.
(2) After the alloy ingot was subjected to high temperature homogenizing processing, a corresponding forging member was then obtained by forging and cogging, mold forging and forming as well as thermal processing.

The condition of the high temperature homogenizing processing includes: a heat preservation was carried out at 1100~1150°C for 24h, and then heat preservation was carried out at 1170-1190°C for 36h; and the condition of the thermal processing includes: solid solution processing was carried out at 1050~1100°C for 2h, air cooling was carried out to room temperature; then the temperature was heated to 600~680°C, aging processing was carried out for 20 h, then air cooling was carried out to room temperature, and then temperature was heated to 750~800°C and aging processing was carried out for 10 h, and then air cooling was carried out to room temperature.

**Table 1**

| Measured ingredients of the high-temperature alloy in different examples (wt%) | | | | | | | | | | | | | | |
|---|---|---|---|---|---|---|---|---|---|---|---|---|---|---|
| No. | C | Co | Cr | W | Al | Ti | Nb | Ta | Mo | B | Zr | Fe | Mg | Ni |
| 1# | 0.02 | 25.1 | 12.8 | 1.22 | 2.42 | 4.51 | 1.21 | 0.82 | 2.81 | 0.018 | 0.028 | 1.04 | 002 | Balance |
| 2# | 0.015 | 25.3 | 12.9 | 1.04 | 2.49 | 4.53 | 0.55 | 0.26 | 303 | 0.019 | 0.027 | 0.96 | 002 | Balance |
| 3# | 0.02 | 24.9 | 12.8 | 1.19 | 2.21 | 3.52 | 0.75 | 0.40 | 2.83 | 0.020 | 0.028 | 1.02 | 002 | Balance |
| 4# | 0.02 | 26.8 | 12.8 | 0.53 | 2.42 | 4.52 | 1.22 | 0.83 | 2.11 | 0.018 | 0.025 | 1.05 | 002 | Balance |
| 5# | 0.02 | 25.2 | 12.9 | 1.23 | 2.43 | 5.42 | 1.19 | 0.79 | 2.77 | 0.018 | 0.027 | 1.02 | 002 | Balance |
| 6# | 0.02 | 24.9 | 12.9 | 1.22 | 2.41 | 4.48 | - | 2.52 | 2.82 | 0.018 | 0.026 | 0.98 | 002 | Balance |
| 7# | 0.02 | 25.2 | 12.8 | 1.18 | 2.38 | 4.53 | 2.53 | - | 2.81 | 0.019 | 0.029 | 0.99 | 002 | Balance |
| Comparison1# | 0.02 | 25.1 | 12.9 | 2.12 | 2.42 | 4.51 | 1.21 | 0.81 | 3.63 | 0.021 | 0.026 | 1.02 | 002 | Balance |
| Comparison2# | 0.02 | 24.8 | 12.8 | 1.22 | 2.39 | 4.50 | - | - | 2.81 | 0.019 | 0.028 | 0.97 | 002 | Balance |
| Comparison3# | 0.02 | 25.0 | 12.8 | 1.19 | 2.43 | 604 | 1.22 | 0.79 | 2.79 | 0.022 | 0.027 | 1.02 | 002 | Balance |

### Example 8

The present example provides a high-temperature alloy casting member with low stacking fault energy, and the method for making the same comprises the following steps.

Dosing was carried out by referring to the principle of the element ratio of the high-temperature alloy 1# in Example 1, casting was performed with the vacuum induction melting technology with a specific mold, and then the thermal processing was carried out to obtain a high-temperature alloy casting member. The condition of the thermal processing was as follows: a heat preservation was carried out at 1100-1150°C for 2h and then air-cooling was carried out to room temperature, then a heat preservation was carried out at 1050~1100°C for 2h, then air cooling was carried out to room temperature, then heating was carried out to 600~680°C and a heat preservation was carried out for 20h, then air cooling was carried out, then heating was carried out to 750~800°C and a heat preservation was carried out for 10h, and then air cooling was carried out to room temperature.

### Example 9

The present example provides a high-temperature alloy additively manufactured structural member with low stacking fault energy, and the method for making the same comprises the following steps.

Dosing was carried out by referring to the principle of the element ratio of the high-temperature alloy 1# in Example 1, the master alloy electrode was made with the vacuum induction smelting, and the powder was made with the vacuum gas atomization method; powder with the particle size in the range of 15~53µm was selected and made into a high-temperature alloy sample with the laser selective melting technology (SLM); printing was carried out with a laser power of 160-280W, at a laser scanning speed of 800~1300mm/s, wherein a spot diameter was 80~100µm, a laser spacing was 90~110µm, and a powder spreading thickness was 30~60µm. Then the additively manufactured structural member was made by the hot isostatic pressure processing and the thermal processing.

The hot isostatic pressure processing is as follows: a heat preservation and pressure preservation was carried out at 1180-1120°C under 120~140MPa for 4-6h. The condition of the thermal processing includes: solid solution processing was carried out at 1050~1100°C for 2h, air cooling was carried out to room temperature; then heating was carried out to 600~680°C, aging processing was carried out for 20 hours, air cooling was carried out to room temperature, and then heating was carried out to 750~800°C and aging processing was carried out for 10h, and air cooling was carried out to room temperature.

### Experimental Example 1

Microstructure of the high-temperature alloy was observed with a high-resolution transmission electron microscope, and the typical structure of the high-temperature alloy was characterized.

Taking High-temperature alloy 1# as an example, the microstructure photo thereof is shown in FIG. 1. As can be seen from the figure, the high-temperature alloy of the present application has low stacking fault energy and has microstructures such as microtwinning easily occurred.

### Experimental Example 2

In accordance with the standards "GBIT 228.2-2015 Metallic Material Tensile Test Part 2: High Temperature Test Method" and "GB/T2039-2012 Metallic Material Uniaxial Tensile Creep Test Method," test results of the mechanical performance of 1#-7# high-temperature alloy forging members made in Examples 1-7 and their comparative alloys 1#-3# high-temperature alloy forging members, and of 1# alloy casting member and additively manufactured structural member made in Example 8 and Example 9, respectively as well as the plasticity of different alloys at 1150°C were shown in Table 2. The process performance of the alloy was make distinctive by the high temperature plasticity in the course of the thermal processing.

**Table 2**

| Test results of tensile performance, durability and lifetime, high temperature plasticity and thermal stability of different high-temperature alloys | | | | | |
|---|---|---|---|---|---|
| No. | 750°C tensile | | 750°C/530MPa durability and lifetime τ/h | 1150°C plasticity | after aging processing for 1000h at 750°C, whether there is TCP phase precipitated |
| | σ_{b}/MPa | σ_{0.2}/MPa | | | |
| 1# Forging member | 1211 | 1083 | 285 | 51% | None |
| 1# Casting member | 1088 | 974 | 298 | / | None |
| 1# additively manufactured structural member | 1197 | 1072 | 270 | / | None |
| 2# Forging member | 1171 | 1054 | 246 | 44% | None |
| 3# Forging member | 1169 | 1056 | 213 | 48% | None |
| 4# Forging member | 1177 | 1072 | 261 | 52% | None |
| 5# Forging member | 1210 | 1080 | 224 | 49% | None |
| 6# Forging member | 1180 | 1077 | 242 | 42% | None |
| 7# Forging member | 1178 | 1074 | 238 | 44% | None |
| Comparison 1# Forging member | 1172 | 1059 | 118 | 32% | There is µ phase precipitated |
| Comparison 2# Forging member | 1120 | 1012 | 102 | 20% | None |
| Comparison 3# Forging member | 1184 | 1082 | 151 | 22% | There is η phase precipitated |

Finally, it should be noted that the above examples are only used to illustrate the technical solutions of the present application, rather than limiting the same; although the present application has been described in detail with reference to the foregoing examples, those ordinarily skilled in the art should understand that the scope of the invention is defined in the appended claims.

### Industrial Applicability

The present application provides a high-temperature alloy with low stacking fault energy, a structural member comprising the high-temperature alloy with low stacking fault energy, and use thereof. The high-temperature alloy with low stacking fault energy can be cast, forged, welded, printed, and so on; it has an excellent process performance, and can be suitable for making structural members in aviation and aerospace equipment, for example it can be used as structural members for long-term use for example a turbine disc, a blade, a casing, and a combustion chamber and the like.

In addition, it should be understood that the high-temperature alloy with low stacking fault energy, and the structural member comprising the high-temperature alloy with low stacking fault energy provided by the present application can be used in industrial applications and are reproducible.

## Claims

1. A high-temperature alloy with low stacking fault energy, **characterized by** comprising, by mass fraction, 0.01%∼0.09% of C, 23.5%∼27.5% of Co, 11%~15% of Cr, 0.1%∼1.8% of W, 2.2%∼2.6% of Al, 3.5%∼5.5% of Ti, 0%-2% of Nb, 0%-2% of Ta, 2.1%∼3.5% of Mo, 0.0001%~0.05% of B, 0.0001%~0.05% of Zr, 0%∼2.5% of Fe, 0 %~0.04% of Mg, 0%~0.02% of Hf, and a balance of Ni,
wherein a sum of mass fractions of Nb and Ta is ≥0.8%,
wherein a ratio of a sum of the mass fractions of Nb and Ta to a mass fraction of the Al element is ≥0.4; and a ratio of a mass fraction of Ti to the mass fraction of Al is ≤2.1.

2. The high-temperature alloy with low stacking fault energy according to claim 1, wherein a mass fraction of Co is 23.5%∼26.5%.

3. The high-temperature alloy with low stacking fault energy according to claim 1 or 2, wherein a mass fraction of C is 0.01%∼0.06%.

4. The high-temperature alloy with low stacking fault energy according to any one of claims 1-3, wherein a sum of mass fractions of W and Mo is ≥3%; and
a mass fraction of W is 1%∼1.8%; and a mass fraction of Mo is 2.1%∼3.0%.

5. The high-temperature alloy with low stacking fault energy according to any one of claims 1-4, wherein a mass fraction of Cr is 12%-14%.

6. The high-temperature alloy with low stacking fault energy according to any one of claims 1-5, wherein a sum of mass fractions of Al, Ti, Nb and Ta is ≥7%.

7. The high-temperature alloy with low stacking fault energy according to claim 6, comprising, by mass fraction, 0.01%~0.04% of C, 24%-26% of Co, 12%-14% of Cr, 1%∼1.5% of W, 2.5%∼3.0% of Mo, 2.3%∼2.5% of Al, 4.4%∼4.6% of Ti, 0.5%∼1.5% of Nb, 0.1%∼2.0% of Ta, 0.001%~0.03% of B, 0.001%~0.03% of Zr, 0%∼2.5% of Fe, 0%∼0.04% of Mg, and a balance of Ni.

8. The high-temperature alloy with low stacking fault energy according to claim 6 or 7, comprising, by mass fraction, 0.01%∼0.02% of C, 24%-26% of Co, 12%-14% of Cr, 1%∼1.5% of W, 2.5%∼3.0% of Mo, 2.3%∼2.5% of Al, 4.4%∼4.6% of Ti, 0.5%∼1.5% of Nb, 0.1%∼2.0% of Ta, 0.001%~0.03% of B, 0.001%~0.03% of Zr, 0%∼2.5% of Fe, 0%∼0.04% of Mg, and a balance of Ni.

9. The high-temperature alloy with low stacking fault energy according to any one of claims 6-8, comprising, by mass fraction, 0.01%∼0.02% of C, 24%-26% of Co, 12%-13% of Cr, 1.1%∼1.3% of W, 2.7%∼2.9% of Mo, 2.3%∼2.5% of Al, 4.4%∼4.6% of Ti, 0.5 %∼1.5% of Nb, 0.1%∼2.0% of Ta, 0.001%~0.03% of B, 0.001%~0.03% of Zr, 0%∼2.5% of Fe, and a balance of Ni.

10. The high-temperature alloy with low stacking fault energy according to any one of claims 1-9, wherein a volume fraction of γ' strengthening phase is above 30%.

11. The high-temperature alloy with low stacking fault energy according to any one of claims 1-10, wherein a volume fraction of γ' strengthening phase is 40%-55%.

12. A structural member, **characterized in that** the structural member is made by the high-temperature alloy with low stacking fault energy according to any one of claims 1-11,
wherein the structural member comprises any one of a forging member, a casting member, and an additively manufactured structural member.

13. The structural member according to claim 12, wherein the structural member comprises any one of a turbine disc, a blade, a casing, and a combustion chamber.

14. Use of the structural member according to claim 12 or 13 in aviation and aerospace equipment.

## Patentansprüche

1. Hochtemperatur-Legierung mit geringer Stapelfehlerenergie, **dadurch gekennzeichnet, dass** sie umfasst, nach Massenanteil: 0,01 % ~ 0,09 % von C, 23,5 % ~ 27,5 % von Co, 11 % ~ 15 % von Cr, 0,1 % ~ 1,8 % von W, 2,2 % ~ 2,6 % von Al, 3,5 % ~ 5,5 % von Ti, 0 % ~ 2 % von Nb, 0 % ~ 2 % von Ta, 2,1 % ~ 3,5 % von Mo, 0,0001 % ~ 0,05 % von B, 0,0001 % ~ 0,05 % von Zr, 0 % ~ 2,5 % von Fe, 0 % ~ 0,04 % von Mg,0 % ~ 0,02 % von Hf, und einen Ausgleichsanteil von Ni,
wobei die Summe von Massenanteilen von Nb und Ta ≥ 0,8 % ist,
wobei ein Verhältnis einer Summe der Massenanteile von Nb und Ta zu einem Massenanteil des Al-Elements ≥ 0,4 beträgt; und ein Verhältnis eines Massenanteils von Ti zu dem Massenanteil von Al ≤ 2,1 beträgt.

2. Hochtemperatur-Legierung mit geringer Stapelfehlerenergie nach Anspruch 1, wobei ein Massenanteil von Co 23,5 % ~ 26,5 % beträgt.

3. Hochtemperatur-Legierung mit geringer Stapelfehlerenergie nach Anspruch 1 oder 2, wobei ein Massenanteil von C 0,01 % ~ 0,06 % beträgt.

4. Hochtemperatur-Legierung mit geringer Stapelfehlerenergie nach einem der Ansprüche 1-3, wobei eine Summe der Massenanteile von W und Mo ≥ 3 % beträgt; und
ein Massenanteil von W 1 % ~ 1,8 % ist und ein Massenanteil von Mo 2,1 % ~ 3,0 % beträgt.

5. Hochtemperatur-Legierung mit geringer Stapelfehlerenergie nach einem der Ansprüche 1-4, wobei ein Massenanteil von Cr 12 % ~ 14 % beträgt.

6. Hochtemperatur-Legierung mit geringer Stapelfehlerenergie nach einem der Ansprüche 1-5, wobei eine Summe der Massenanteile von Al, Ti, Nb und Ta ≥ 7 % beträgt.

7. Hochtemperatur-Legierung mit geringer Stapelfehlerenergie nach Anspruch 6, umfassend nach Massenanteil: 0,01 % ~ 0,04 % von C, 24 % ~ 26 % von Co, 12 % ~ 14 % von Cr, 1 % ~ 1,5 % von W, 2,5 % ~ 3,0 % von Mo, 2,3 % ~ 2,5 % von Al, 4,4 % ~ 4,6 % von Ti, 0,5 % ~ 1,5 % von Nb, 0,1 % ~ 2,0 % von Ta, 0,001 % ~ 0,03 % von B, 0,001 % ~ 0,03 % von Zr, 0 % ~ 2,5 % von Fe, 0 % ~ 0,04 % von Mg, und einen Ausgleichsanteil von Ni.

8. Hochtemperatur-Legierung mit geringer Stapelfehlerenergie nach Anspruch 6 oder 7, umfassend nach Massenanteil: 0,01 % ~ 0,02 % von C, 24 % ~ 26 % von Co, 12 % ~ 14 % von Cr, 1 % ~ 1,5 % von W, 2,5 % ~ 3,0 % von Mo, 2,3 % ~ 2,5 % von Al, 4,4 % ~ 4,6 % von Ti, 0,5 % ~ 1,5 % von Nb, 0,1 % ~ 2,0 % von Ta, 0,001 % ~ 0,03 % von B, 0,001 % ~ 0,03 % von Zr, 0 % ~ 2,5 % von Fe, 0 % ~ 0,04 % von Mg, und einen Ausgleichsanteil von Ni.

9. Hochtemperatur-Legierung mit geringer Stapelfehlerenergie nach einem der Ansprüche 6-8, umfassend nach Massenanteil: 0,01 % ~ 0,02 % von C, 24 % ~ 26 % von Co, 12 % ~ 13 % von Cr, 1,1 % ~ 1,3 % von W, 2,7 % ~ 2,9 % von Mo, 2,3 % ~ 2,5 % von Al, 4,4 % ~ 4,6 % von Ti, 0,5 % ~ 1,5 % von Nb, 0,1 % ~ 2,0 % von Ta, 0,001 % ~ 0,03 % von B, 0,001 % ~ 0,03 % von Zr, 0 % ~ 2,5 % von Fe, und einen Ausgleichsanteil von Ni.

10. Hochtemperatur-Legierung mit geringer Stapelfehlerenergie nach einem der Ansprüche 1-9, wobei ein Volumenanteil der γ'-Verfestigungsphase über 30 % liegt.

11. Hochtemperatur-Legierung mit geringer Stapelfehlerenergie nach einem der Ansprüche 1-10, wobei ein Volumenanteil der γ'-Verfestigungsphase 40 % ~ 55 % beträgt.

12. Strukturelement, **dadurch gekennzeichnet, dass** das Strukturelement aus der Hochtemperatur-Legierung mit geringer Stapelfehlerenergie nach einem der Ansprüche 1-11 hergestellt ist,
wobei das Strukturelement ein Element ein beliebiges eines Schmiedeelements, eines Gusselements und eines additiv hergestellten Strukturelements umfasst.

13. Strukturelement nach Anspruch 12, wobei das Strukturelement ein beliebiges eines einer Turbinenscheibe, einer Schaufel, einem Gehäuse und einer Brennkammer umfasst.

14. Verwenden des Strukturelements nach Anspruch 12 oder 13 bei Luftfahrt- und Raumfahrtausrüstung.

## Revendications

1. Alliage haute température ayant une faible énergie de défaut d'empilement, **caractérisé en ce qu'**il comprend, en fraction massiques, 0,01 % à 0,09 % de C, 23,5 % à 27,5 % de Co, 11 % à 15 % deCr, 0,1 % à 1,8 % deW, 2,2 % à2,6 % d'Al, 3,5 % à5,5 % de Ti, 0 % à 2 % de Nb, 0 % à 2 % de Ta, 2,1 % à 3,5 % de Mo, 0,0001 % à 0,05 % de B, 0,0001 % à 0,05 % de Zr, 0 % à 2,5 % de Fe, 0 % à 0,04 % de Mg, 0 % à 0,2 % de Hf, le reste étant du Ni,
dans lequel la somme des fractions en masse de Nb et Ta est ≥ ,8 %,
dans lequel le rapport de la somme des fractions massiques de Nb et Ta à la fraction massique d'Al élémentaire est ≥ 0,4 ; et le rapport de la fraction massique de Ti à la fraction massique d'Al est ≤ 2,1.

2. Alliage haute température ayant une faible énergie de défaut d'empilement selon la revendication 1, dans lequel la fraction massique du Co est de 23,5 % à 26,5 %.

3. Alliage haute température ayant une faible énergie de défaut d'empilement selon la revendication 1 ou 2, dans lequel la fraction massique de C est de 0,01 % à 0,06 %.

4. Alliage haute température ayant une faible énergie de défaut d'empilement selon l'une quelconque des revendications 1 à 3, dans lequel la somme des fractions massiques de W et Mo est ≥ 3 % ; et
la fraction massique de W est de 1 % à 1,8 % ; et la fraction massique de o est de 2,1 % à 3,0 %.

5. Alliage haute température ayant une faible énergie de défaut d'empilement selon l'une quelconque des revendications 1 à 4, dans lequel la fraction massique de Cr est de 12 % à 14 %.

6. Alliage haute température ayant une faible énergie de défaut d'empilement selon l'une quelconque des revendications 1 à 5, dans lequel la somme des fractions massiques d'Al, Ti, Nb et Ta est ≥ 7 %.

7. Alliage haute température ayant une faible énergie de défaut d'empilement selon la revendication 6, comprenant, en fractions massiques, 0,01 % à 0,04 % de C, 24 % à 26 % de Co, 12 % à 14 % de Cr, 1 % à 1,5 % de W, 2,5 % à 3,0 % de Mo, 2,3 % à 2,5 % d'Al, 4,4 % à 4,6 % de Ti, 0,5 % à 1,5 % de Nb, 0,1 % à 2,0 % de Ta, 0,001 % à 0,03 % de B, 0,001 % à 0,03 % de Zr, 0 % à 2,5 % de Fe, 0 % à 0,04 % de Mg, et du Ni pour le reste.

8. Alliage haute température ayant une faible énergie de défaut d'empilement selon la revendication 6 ou 7, comprenant, en fractions massiques, 0,01 % à 0,02 % de C, 24 % à 26 % de Co, 12 % à 14 % de Cr, 1 % à 1,5 % de W, 2,5 % à 3,0 % de Mo, 2,3 % à 2,5 % d'Al, 4,4 % à 4,6 % de Ti, 0,5 % à 1,5 % de Nb, 0,1 % à 2,0 % de Ta, 0,001 % à 0,03 % de B, 0,001 % à 0,03 % de Zr, 0 % à 2,5 % de Fe, 0 % à 0,04 % de Mg, et du Ni pour le reste.

9. Alliage haute température ayant une faible énergie de défaut d'empilement selon l'une quelconque des revendications 6 à 8, comprenant, en fractions massiques, 0,01 % à 0,02 % de C, 24 % à 26 % de Co, 12 % à 13 % de Cr, 1,1 % à 1,3 % de W, 2,7 % à 2,9 % de Mo, 2,3 % à 2,5 % d'Al, 4,4 % à 4,6 % de Ti, 0,5 % à 1,5 % de Nb, 0,1 % à 2,0 % de Ta, 0,001 % à 0,03 % de B, 0,001 % à 0,03 % de Zr, 0 % à 2,5 % de Fe, et du Ni pour le reste.

10. Alliage haute température ayant une faible énergie de défaut d'empilement selon l'une quelconque des revendications 1 à 9, dans lequel la fraction volumique de la phase de renforcement γ' est supérieure à 30 %

11. Alliage haute température ayant une faible énergie de défaut d'empilement selon l'une quelconque des revendications 1 à 10, dans lequel la fraction volumique de la phase de renforcement γ' est de 40 % à 55 %.

12. Elément structurel, **caractérisé en ce que** l'élément structurel est fait de l'alliage haute température ayant une faible énergie de défaut d'empilement selon l'une quelconque des revendications 1 à 11,
lequel élément structurel comprend l'un quelconque parmi un élément de forgeage, un élément de coulée, et un élément structurel fabriqué par fabrication additive.

13. Elément structurel selon la revendication 12, lequel élément structurel comprend l'un quelconque parmi un disque de turbine, une lame, un boîtier, et une chambre de combustion.

14. Utilisation de l'élément structurel selon la revendication 12 ou 13 dans un équipement avionique ou aérospatial.
